# EUROPÄISCHE PATENTANMELDUNG

(11) **EP 1 917 852 A1**
(43) Veröffentlichungstag der Anmeldung: **07.05.2008**
(21) Anmeldenummer: 06123257.5
(22) Anmeldetag: 31.10.2006
(51) Int. Cl.: A01K 1/015, B32B 27/00

(54) **Bodenbelag für Tierställe**

(71) Anmelder: Sika Technology AG, 6340 Baar (CH)
(72) Erfinder: Slongo, Mario, 1712 Tafers (CH); Serena, Silvio, 1715 Altenswil (CH)
(74) Vertreter: Sika Patent Attorneys

(57) **Zusammenfassung**

Die Erfindung betrifft die Verwendung eines mehrschichtigen Werkstoffs 6 als Bodenbelag für Tierställe, insbesondere für Stallböden für Massentierhaltung, wobei der Bodenbelag mindestens eine erste Schicht **S1** 1 und mindestens eine zweite Schicht **S2** 2 umfasst, wobei die erste Schicht **S1** 1 auf der dem Boden zugewandten Seite und die zweite Schicht S2 2 auf der dem Boden abgewandten Seite des Bodenbelags vorliegt, dadurch gekennzeichnet, dass die erste Schicht **S1** 1 ein Schaumstoff oder Faserwerkstoff ist und die zweite Schicht **S2** 2 aus einem verschweissbaren thermoplastischen Material ist, welches mindestens ein thermoplastisches Polymer **P2** aufweist, wobei die Gewichtssumme aller thermoplastischen Polymere in der zweiten Schicht **S2** 2 mindestens 30 Gew.-%, bezogen auf das Gesamtgewicht der zweiten Schicht **S2** 2, beträgt, und wobei der mehrschichtige Werkstoff 6 am Rand mindestens ein Mittel zur Abdichtung 4 aufweist.

## Beschreibung

### Technisches Gebiet

Die Erfindung betrifft das Gebiet der Kunststoffe, insbesondere der Kunststofffolien und deren Verwendung als Bodenbelag für Tierställe.

### Stand der Technik

Masttiere werden vor allem auf Beton- oder Holzböden oder auf Betonböden mit eingestreutem Stroh gehalten. Solche Böden sind hart und können dazu führen, dass die Tiere Verletzungen, insbesondere Schürfungen, Schwellungen oder andere Wundstellen an Integumenten, insbesondere an Beinen oder Füssen bzw. Hufen, aufweisen. Das Wundliegen der Tiere ist unökonomisch, denn dadurch bleibt die Gewichtszunahme der Tiere kleiner, sie produzieren weniger Nachkommen und beispielsweise die Milchproduktion nimmt ab. Zusätzlich ist die Verwendung von Stroh teuer und ermöglicht durch das Aufsaugen von Tierexkrementen das Verbreiten von Krankheiten.
Es wurde versucht, mit Gummimatten einen weicheren Untergrund für Masttiere zu gestalten. Eine solche Gummimatte wird beispielsweise in EP0928557A1 beschrieben. Diese Gummimatte besteht hauptsächlich aus Altgummiteilchen und weist zwischen Matte und Boden mindestens einen Hohlraum auf, welcher mit einem weichen Material aufgefüllt sein kann. Der Nachteil einer solchen Gummimatte liegt darin, dass die Tiere gerne am Gummi knabbern und den Bodenbelag bei erster Gelegenheit aufreissen. Dadurch kann Flüssigkeit in den Hohlraum oder die untere Schicht vordringen und Fäulnis entstehen, wodurch der Bodenbelag ersetzt werden muss. Zusätzlich kann eine solche Gummimatte nicht einfach verarbeitet, wie beispielsweise verschweisst, werden.

### Darstellung der Erfindung

Aufgabe der vorliegenden Erfindung ist es daher, einen Bodenbelag für Tierställe bereitzustellen, welcher einfach herzustellen ist, welcher Verletzungen an Tieren vermindert und welcher verhindert, dass Flüssigkeit in die weiche Schicht vordringen kann. Es wurde nun gefunden, dass die Verwendung eines mehrschichtigen Bodenbelags sowie ein Verfahren gemäss den unabhängigen Ansprüchen diese Aufgabe löst. Besonders bevorzugte Ausführungsformen sind in den Unteransprüchen angegeben.
Dieser mehrschichtige Bodenbelag zeichnet sich unter anderem dadurch aus, dass die obere Schicht strapazierfähig, reinigungsfreundlich und gut mit verschiedenen Kunststoffen verschweiss- oder verklebbar ist, dass das Mittel zur Abdichtung vor Flüssigkeit und dadurch vor Fäulnis schützt, und dass die Tiere auf einem solchen Bodenbelag weniger wund liegen und dadurch mehr zunehmen und mehr Nachkommen produzieren. Zudem weisen derartige Bodenbeläge eine hervorragende Verarbeitbarkeit auf, sind einfach anzuwenden und günstig im Unterhalt.

### Weg zur Ausführung der Erfindung

Die vorliegende Erfindung betrifft die Verwendung eines mehrschichtigen Werkstoffs als Bodenbelag für Tierställe, insbesondere für Stallböden für Massentierhaltung, wobei der Bodenbelag mindestens eine erste Schicht **S1** und mindestens eine zweite Schicht **S2** umfasst, wobei die erste Schicht **S1** auf der dem Boden zugewandten Seite und die zweite Schicht **S2** auf der dem Boden abgewandten Seite des Bodenbelags vorliegt, dadurch gekennzeichnet, dass die erste Schicht **S1** ein Schaumstoff oder Faserwerkstoff ist und die zweite Schicht **S2** aus einem verschweissbaren thermoplastischen Material ist, welches mindestens ein thermoplastisches Polymer **P2** aufweist, wobei die Gewichtssumme aller thermoplastischen Polymere in der zweiten Schicht **S2** mindestens 30 Gew.-%, bezogen auf das Gesamtgewicht der zweiten Schicht **S2,** beträgt, und wobei der mehrschichtige Werkstoff am Rand mindestens ein Mittel zur Abdichtung aufweist.

Der erfindungsgemässe Bodenbelag ist insbesondere geeignet zum Beschichten von Böden für Massentierhaltung, beispielsweise für Vieh-, Schweine- oder Ziegenställe, insbesondere für Schweineställe oder Ziegenställe. Der erfindungsgemässe Bodenbelag ist daher besonders geeignet zur Steigerung des Wohlbefindens, insbesondere zur Verminderung von Verletzungen, von Tieren in Tierhaltungen.

In einer besonders bevorzugten Ausführungsform weist der Bodenbelag zwischen dem Boden und der ersten Schicht **S1** mindestens eine weitere Schicht **S3** auf, wobei die dritte Schicht **S3** aus einem verschweissbaren thermoplastischen Material ist, welches mindestens ein thermoplastisches Polymers **P3** aufweist, wobei die Gewichtssumme aller thermoplastischen Polymere der dritten Schicht **S3** mindestens 30 Gew.-%, bezogen auf das Gesamtgewicht der dritten Schicht **S3,** beträgt. Vorzugsweise ist die zweite Schicht **S2,** noch mehr bevorzugt die zweite Schicht **S2** und die dritte Schicht **S3** flüssigkeitsundurchlässig.

Das Mittel zur Abdichtung ist vorzugsweise eine Abdichtungsleiste, eine Klebverbindung oder eine Schweissnaht. Das Mittel zur Abdichtung dient dazu, dass das Wasser oder eine andere Flüssigkeit, wie beispielsweise Tierexkremente, daran gehindert wird, in die erste Schicht **S1,** insbesondere zwischen den mehrschichtigen Werkstoff oder darunter, einzudringen. Der Bodenbelag kann am Rand teilweise oder vollständig mit dem Mittel zur Abdichtung abgedichtet sein. Als Abdichtungsleisten sind beispielsweise Leisten aus Kunststoff, insbesondere aus Hartkunststoff oder Metall geeignet. Vorzugsweise werden solche Leisten am Unterboden oder an der Wand oder an beiden befestigt, beispielsweise mit Nägeln, Klammern oder Schrauben. Vorzugsweise wird der Bodenbelag an der Wand etwas hochgezogen und dann mit der Leiste befestigt. So bildet der Belag eine Art Wanne und die Flüssigkeit kann nicht unter den Belag fliessen. Oder die Leiste weist im Querschnitt eine L-förmige Form auf und wird am Übergang zwischen Boden und Wand angebracht.
Besonders bevorzugt ist das Mittel zur Abdichtung eine Schweissnaht. In einer besonders bevorzugten Ausführungsform verbindet die Schweissnaht die obere zweite Schicht **S2** mit der unteren dritten Schicht **S3.** Zwischen der zweiten Schicht **S2** und der dritten Schicht **S3** befindet sich die erste Schicht **S1.** Damit die zweite Schicht **S2** mit der unteren dritten Schicht **S3** gut verschweisst werden kann, sind diese beiden Schichten flächenmässig vorzugsweise etwas grösser als die erste Schicht **S1** und bilden eine Art "Kissenhülle", in welche die erste Schicht **S1** geschoben werden kann. Vorzugsweise ist der Rand zwischen der zweiten Schicht **S2** und der dritten Schicht **S3** durchgehend durch die Schweissnaht verschlossen, so dass keine Flüssigkeit in die erste Schicht **S1** eindringen kann. Zusätzlich kann der mehrschichtige Bodenbelag, beispielsweise die dritte Schicht **S3,** am Boden oder an der Wand befestigt werden. Zum Verschweissen wird beispielsweise die zweite Schicht **S2** und die dritte Schicht **S3** am Rand mit einer Heizquelle, beispielsweise mit einem Heissluftföhn, erhitzt, so dass eine Schweissstelle entsteht.
Das Mittel zur Abdichtung kann gleichzeitig als Befestigungsmittel dienen. Beispielsweise kann ein Klebstoff den Rand des Bodenbelags abdichten, andererseits kann durch den Klebstoff der Bodenbelag am Boden oder an der Wand befestigt werden.

In einer Ausführungsform ist die erste Schicht **S1** aus einem Faserwerkstoff. Unter Faserwerkstoff ist im ganzen vorliegenden Dokument ein Werkstoff zu verstehen, welcher aus Fasern aufgebaut ist. Die Fasern umfassen oder bestehen aus organischem oder synthetischem Material. Insbesondere handelt es sich um Zellulose-, Baumwollfasern, Proteinfasern oder um synthetische Fasern. Als synthetische Fasern sind vor allem bevorzugt Fasern aus Polyester oder aus einem Homo- oder Copolymeren von Ethylen und/oder Propylen oder aus Viskose zu nennen. Die Fasern können hierbei Kurzfasern oder Langfasern, gesponnene, gewebte oder ungewebte Fasern oder Filamente sein. Weiterhin können die Fasern gerichtete oder gestreckte Fasern sein. Weiterhin kann es vorteilhaft sein, unterschiedliche Fasern, sowohl in Geometrie als auch Zusammensetzung, miteinander zu verwenden.
Weiterhin umfasst der Faserwerkstoff Hohlräume. Diese Hohlräume werden durch geeignete Herstellverfahren aufgebaut. Vorzugsweise sind die Hohlräume zumindest teilweise abgeschlossen. Dies ermöglicht einen weichen Untergrund und erlaubt, dass der Faserwerkstoff unter der Last der Tiere seine reversible Formstabilität beibehält.

Der aus Fasern aufgebaute Körper kann auf die verschiedensten dem Fachmann bekannten Verfahren hergestellt werden. Insbesondere kommen Körper zum Einsatz, die ein Gewebe, Gelege oder Gewirke sind.
Der Faserwerkstoff kann ein lockereres Material aus Spinnfasern oder Filamenten sein, deren Zusammenhalt im Allgemeinen durch die den Fasern eigene Haftung gegeben ist. Hierbei können die Einzelfasern eine Vorzugsrichtung aufweisen oder ungerichtet sein. Der aus Fasern aufgebauter Körper kann mechanisch verfestigt werden durch Vernadeln, Vermaschen oder durch Verwirbeln mittels scharfer Wasserstrahlen.
Besonders bevorzugt als Faserwerkstoff ist ein Filz oder Vlies.

In einer besonders bevorzugten Ausführungsform ist die erste Schicht **S1** aus einem Schaumstoff. Unter einem Schaumstoff wird im ganzen vorliegenden Dokument ein Werkstoff verstanden, welcher aus weichem, geschäumten elastischen Material besteht. Sowohl organisches, wie auch synthetisches Material ist geeignet, insbesondere ein unter Verwendung von Treibmitteln hergestellter Kunststoff. Der Schaumstoff umfasst über die ganze Masse verteilt offene oder geschlossene Hohlräume oder Poren, sogenannte Zellen, welche durch geeignete Herstellverfahren aufgebaut werden, oder welche im natürlichen Schaumstoff enthalten sind. Hierbei ist bevorzugt, dass die Zellen geschlossen sind, damit der Schaumstoff bei Druckverformung durch das Gewicht der Tiere möglichst keine bleibende Verformung aufweist.
Vorzugsweise besteht der Schaumstoff aus Polymeren, welche natürliche oder synthetische elastische Polymere, Gummi aus vulkanisiertem Kautschuk oder Thermoplaste umfasst oder daraus besteht. Die Polymere können vernetzt oder teilweise vernetzt sein. Die Vernetzung kann beispielsweise mittels Elektronenstrahlen oder durch Peroxyde erzeugt werden. Ein als Schaumstoff geeigneter Kunststoff ist bei Gebrauchstemperatur, das heisst bei Temperaturen zwischen -20 bis 50°C, vorzugsweise zwischen 0 bis 40°C, besonders bevorzugt zwischen 10 bis 30°C, insbesondere bei 20°C, elastisch. Besonders bevorzugt ist der Schaumstoff ein Thermoplast, welcher mit der zweiten Schicht **S2** und der dritten Schicht **S3** kaschiert oder laminiert werden kann

Beispiele für geeignete Polymere sind Polyvinylchlorid (PVC), Polyolefin, Polystyrol, Styrol-Copolymere, Polyurethan, Polyisocyanurat, Polyacetat, Poly(meth)acrylat, Polyamid und Polycarbonat. Insbesondere geeignet sind Polyvinylchlorid-, Polyethylen- und Polypropylenschäume, oder Copolymere von Ethylen, beispielsweise ein Ethylen-Styrol-Copolymer.
Beispiele für geeignete Schaumstoffe für die erfindungsgemässe Verwendung sind der Polyethylen-Schaumstoff Trocellen®classic C-MN3 von Trocellen GmbH (Deutschland), oder der Polyurethan Ether Schaumstoff von Otto Bock Schaumstoffwerke GmbH (Deutschland).

Die erste Schicht **S1** weist vorzugsweise eine Schichtdicke von mindestens 0.1 cm, vorzugsweise 1 bis 6 cm, noch mehr bevorzugt von 2 bis 4 cm, auf. Die erste Schicht **S1** ist vorzugsweise eine weiche, flexible Schicht, und behält unter der Last der Tiere seine reversible Formstabilität bei.

Das mindestens eine thermoplastische Polymer **P2** der oberen zweiten Schicht **S2** ist vorzugsweise ausgewählt aus der Gruppe bestehend aus Polyamid, Polyester, Polycarbonat, Polyacetat, Polyurethan, und einem Homo-oder Copolymer, welches mindestens eine Monomereinheit **M1** enthält, welche ausgewählt ist aus der Gruppe bestehend aus Olefin, insbesondere Ethylen, Propylen, Butylen, Isobutylen, chloriertem Ethylen, chlorsulfoniertem Ethylen, Vinylacetat, Vinylalkohol, Vinylchlorid, (Meth)acrylat, (Meth)acrylsäure, Butylacrylat, Fumarsäure, Fumarsäureester, Maleinsäure, Maleinsäureester, Maleinsäureanhydrid, Styrol, Acrylonitril, Butadien, und Isobutadien.

Ist das Polymer **P2** ein Homo- oder Copolymer, beträgt die Anzahl der Monomereinheit **M1** vorzugsweise mindestens 50%, bevorzugt mindestens 60%, noch mehr bevorzugt mindestens 80%, am meisten bevorzugt 90% bis 100% aller Monomereinheiten des Polymers **P2.**
Unter Monomereinheit wird im ganzen vorliegenden Dokument eine Struktureinheit verstanden, welche von ungesättigten Monomeren nach erfolgter radikalischer Polymerisation herrührt. Unter der Monomereinheit **M1** wird folglich eine Struktureinheit verstanden, welche von den ungesättigten Monomeren wie beispielsweise Ethen, Propen oder 1-Buten sowie Mischungen davon nach erfolgter radikalischer Polymerisation herrührt. Für den Fachmann ist selbstverständlich klar, dass mit Monomereinheiten nicht gemeint ist, dass das Copolymer freie Monomere enthält, sondern dass die Monomereinheiten copolymerisiert im Copolymer vorliegen.
Als bevorzugte Polymere **P2** haben sich solche erwiesen, bei welchen die Monomereinheit **M1** nach der Polymerisation chloriert oder chlorsulfoniert worden ist.
Das Polymer **P2** kann neben der Monomereinheit **M1** weitere Monomereinheiten enthalten. Als geeignete weitere Monomereinheiten haben sich Einheiten von Ethylen, Propylen, Butylen, Isobutylen, Vinylacetat, Acrylat, Methacrylat, Acrylsäure, Methacrylsäure, Butylacrylat, Fumarsäure, Fumarsäureester, Maleinsäure, Maleinsäureester, Maleinsäureanhydrid, Styrol, Acrylonitril, Kohlenmonoxid und Vinylchlorid erwiesen. Auch Mischungen von zwei oder mehreren Polymeren, sogenannte Polymerblends, können verwendet werden. Als besonders bevorzugt gelten die Copolymere der Monomere Ethylen und Propylen, Ethylen und Vinylacetat (EVA) oder Ethylen und (Meth)acrylat. Auch Terpolymere, wie beispielsweise das Terpolymer Ethylen-Vinylacetat-Kohlenmonoxid (EVACO), das Terpolymer der Monomere Acrylat, Styrol und Acrylonitril oder das Terpolymer Ethylen-(n-Butylacrylat)-Kohlenmonoxid (ENBACO), sind geeignet.
Vorzugsweise besteht das thermoplastische Polymer **P2** aus Polyvinylchlorid oder einem Polyolefin, vorzugsweise aus Polyethylen, Polypropylen, einem Copolymer aus Ethylen und Propylen, chloriertem Polyethylen, chlorsulfoniertem Polyethylen, einem Copolymer aus Ethylen und Vinylacetat, oder eine Mischung davon.

In einer Ausführungsform ist das thermoplastische Polymer **P2** ein thermoplastisches Polyurethan. Polyurethan basierende Polymere werden aus Polyisocyanat, vorzugsweise aus mehreren Isocyanat-Gruppen aufweisenden Polyurethanprepolymeren hergestellt.
Das Polyurethanprepolymer wird aus der Umsetzung mindestens eines Polyisocyanates mit einer Verbindung, welche zwei oder mehrere NCO-reaktive funktionelle Gruppen aufweist, erhalten. Derartige NCO-reaktive Gruppen sind insbesondere Hydroxyl-, Merkapto- oder primäre oder sekundäre Amino-Gruppen.
Als Verbindung, welche zwei oder mehrere NCO-reaktive funktionelle Gruppen aufweist, gelten insbesondere Polyole, Polyamine, oder Polyaminoalkohole. Beispiele für Polyaminoalkohole sind Diethanolamin, Ethanolamin, Triethanolamin. Als Polyole sind Polyetherpolyole, Polyesterpolyole und Polycarbonatpolyole bevorzugt. Bevorzugt sind als Polyole Diole. Insbesondere bevorzugt sind Gemische von Polyolen, insbesondere ein Gemisch von nieder- und höhermolekularen Polyolen, insbesondere Diolen, insbesondere von nieder- und höhermolekularen Polyester-, Polyester- und Polycarbonatpolyolen, vorzugsweise ein Gemisch von nieder- und höhermolekularen Polyester-, Polyether- und Polycarbonatdiolen. Niedermolekulare Polyole haben bevorzugt ein Molekulargewicht von 50 bis 500 g/mol. Höhermolekulare Polyole haben bevorzugt ein Molekulargewicht von über 500 g/mol, noch mehr bevorzugt von 550 bis 5000 g/mol, insbesondere bevorzugt von 800 bis 3000 g/mol.
Als Polyesterpolyole sind insbesondere jene geeignet, welche hergestellt sind beispielsweise aus zwei- bis dreiwertigen Alkoholen, wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole, mit organischen Dicarbonsäuren oder deren Anhydride oder Ester, wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise aus ε-Caprolacton.
Besonders bevorzugte Polyesterpolyole sind Polyesterpolyole aus Adipinsäure, Sebacinsäure oder Dodecandicarbonsäure als Dicarbonsäure und aus Hexandiol oder Neopentylglycol als zweiwertigen Alkohol.
Besonders bevorzugt sind Polyurethanprepolymere aus Polyolen und Polyisocyanten, insbesondere aus Diolen, vorzugsweise Polyesterdiol, Polyetherdiol oder Butandiol, Triolen oder Diol/Triol-Mischungen sowie aus Diisocyanaten, vorzugsweise aromatischen, aliphatischen oder cycloaliphatischen Diisocyanaten, Trisocyanaten oder Düsocyanat/Trisocyanat-Mischungen.

Die Gewichtssumme aller thermoplastischen Polymere in der zweiten Schicht **S2** beträgt mindestens 30 Gew.-%, bezogen auf das Gesamtgewicht der zweiten Schicht **S2.** Vorzugsweise liegt das thermoplastische Polymer **P2** in einer Menge von mindestens 30 Gew.-%, vorzugsweise von 30-100 Gew.-%, bevorzugt von 50-95 Gew.-%, noch mehr bevorzugt von 70-90 Gew.-%, bezogen auf das Gesamtgewicht der zweiten Schicht **S2** vor. Die zweite Schicht S2 kann auch aus Recyclingmaterial, beispielsweise aus 100% Recyclingmaterial, hergestellt werden. Vorzugsweise ist die zweite Schicht **S2** hitze- und/oder quellverschweissbar, beispielsweise durch Heissluft oder ein Lösungsmittel, beispielsweise Tetrahydrofuran. Vorzugsweise ist die zweite Schicht **S2** verklebbar.

Die Schicht **S2** weist vorzugsweise eine Schichtdicke von mindestens 0.1 mm, vorzugsweise 0.5 bis 5 mm, noch mehr bevorzugt von 2 bis 3 mm, auf. Vorzugsweise ist die zweite Schicht **S2** eine thermoplastische Folie, insbesondere ein Folienband. Folienbänder verschiedener Grösse können zu einer Folie einer definierten Grösse verschweisst werden. Dadurch werden die Folien so miteinander verbunden, dass die Tiere bei der Übergangsstelle die Folie nicht verletzen und anknabbern oder einreissen können.
In einer bevorzugten Ausführungsform weist die zweite Schicht **S2** auf der der ersten Schicht **S1** abgewandten Oberfläche, d.h. auf der Oberfläche, mit welcher die Tiere in Kontakt kommen, eine rutschfeste Oberfläche auf, damit die Tiere nicht ausrutschen. Eine solche rutschfeste Oberfläche wird durch spezielle Behandlung der Oberfläche, vorzugsweise durch Prägung, insbesondere Diamantprägung, Einsandung, Beflockung oder durch Beschichtung der zweiten Schicht **S2** erreicht. Die besondere Gestaltung der Oberfläche wird vorzugsweise direkt bei der Herstellung der zweiten Schicht **S2** vorgenommen. Vorzugsweise ist die Oberfläche so gestaltet, dass sie einfach zu reinigen ist, und sich der Schmutz nicht in der Oberfläche festkrallt.
Als zweite Schicht **S2** sind beispielsweise die Folien Sikaplan®-24G, Sikaplan®-14.6, Sikaplan®-18Schutz, Sikaplan®-20 PECO geeignet, alle erhältlich von Sika Schweiz AG.

Das mindestens eine thermoplastische Polymer **P3** der unteren dritten Schicht **S3** ist vorzugsweise ausgewählt aus der Gruppe bestehend aus Polyamid, Polyester, Polycarbonat, Polyacetat, Polyurethan, und einem Homo-oder Copolymer, welches mindestens eine Monomereinheit **M2** enthält, welche ausgewählt ist aus der Gruppe bestehend aus Olefin, insbesondere Ethylen, Propylen, Butylen, Isobutylen, chloriertem Ethylen, chlorsulfoniertem Ethylen, Vinylacetat, Vinylalkohol, Vinylchlorid (Meth)acrylat, (Meth)acrylsäure, Fumarsäure, Fumarsäureester, Maleinsäure, Maleinsäureester, Maleinsäureanhydrid, Styrol, Acrylonitril, Butadien, und Isobutadien. Die dritte Schicht **S3** kann auch aus Recyclingmaterial, beispielsweise aus 100% Recyclingmaterial, hergestellt werden. Vorzugsweise ist die dritte Schicht **S3** hitze- und/oder quellverschweissbar, beispielsweise durch Heissluft oder ein Lösungsmittel, beispielsweise Tetrahydrofuran. Vorzugsweise ist die dritte Schicht **S3** verklebbar.

Als thermoplastische Polymere **P3** sind dieselben Polymere geeignet, wie sie für das thermoplastische Polymer **P2** beschrieben wurden. Als Monomereinheit **M2** kommen diejenigen Monomereinheiten in Frage, wie sie für die Monomereinheit **M1** beschrieben wurden. In einer bevorzugten Ausführungsform bestehen die zweite Schicht **S2** und die dritte Schicht **S3** aus demselben verschweissbaren thermoplastischen Material. Vorzugsweise enthalten die zweite Schicht **S2** und die dritte Schicht **S3** dasselbe thermoplastische Polymer, vorzugsweise Polyvinylchlorid.

Die dritte Schicht **S3** weist vorzugsweise eine Schichtdicke von mindestens 0.1 mm, vorzugsweise 0.5 bis 5 mm, noch mehr bevorzugt von 2 bis 3 mm, auf. Vorzugsweise ist die dritte Schicht S3 eine thermoplastische Folie, insbesondere ein Folienband. Als dritte Schicht **S3** sind beispielsweise die Folien Sikaplan®-24G, Sikaplan®-14.6, Sikaplan®-18Schutz, Sikaplan®-20 PECO geeignet, alle erhältlich von Sika Schweiz AG.

Als weitere Bestandteile der ersten Schicht **S1,** der zweiten Schicht **S2** und der dritten Schicht **S3** können unabhängig voneinander weitere Zusatzstoffe vorhanden sein. Insbesondere sind dies für thermoplastische Kunststoffe üblichen Bestandteile und Verarbeitungsmittel, wie beispielsweise Füllstoffe wie z.B. Kreide, Verlaufsmittel wie z.B. Metallseifen, Additive wie UV-und Hitzestabilisatoren, Stabilisatoren wie z.B. auf Ba/Zn- oder Ca/Zn-Basis, Weichmacher wie z.B. epoxidiertes Sojabohnenöl oder Phthalate, Polysebazate oder Polyadipate, Gleitmittel, Trockungsmittel, Entschäumer, Tenside, Biozide, Antiabsetzmittel, Flammschutzmittel, Antioxidantien wie z.B. auf phenolischer Basis, Geruchsstoffe, Pigmente wie z.B. Titandioxid oder Russ, und Farbstoffe. Der Anteil an weiteren Zusatzstoffen beträgt zwischen 0 und 70 Gew.-%, insbesondere zwischen 5 und 50 Gew.-%, besonders bevorzugt zwischen 10 und 30 Gew.-%, bezogen auf das Gesamtgewicht der ersten Schicht **S1,** bzw. der zweiten Schicht **S2,** bzw. der dritten Schicht **S3.**

Der mehrschichtige Bodenbelag kann weitere Schichten enthalten. Beispielsweise kann die obere zweite Schicht **S2** und gegebenenfalls die dritte Schicht S3 verstärkt sein durch einen Faserwerkstoff, beispielsweise durch ein Gewebe, Gelege, Gewirke, beispielsweise durch ein Vlies, insbesondere durch ein Kunststoff- oder Glasvlies.

Die verschiedenen Schichten können lose aufeinander gelegt sein oder kraftschlüssig, vorzugsweise in direktem Kontakt miteinander, verbunden, vorzugsweise verklebt, verschweisst, laminiert, kaschiert oder verschraubt, sein.
Unter "direktem Kontakt miteinander" wird verstanden, dass keine weitere Schicht oder Substanz zwischen zwei Werkstoffen vorliegt und dass die zwei Werkstoffe direkt miteinander verbunden sind, beziehungsweise aneinander haften, z.B. indem sie miteinander verschweisst oder laminiert sind. Am Übergang zwischen zwei Werkstoffen können die zwei Werkstoffe ineinander vermischt vorliegen.
Beispielsweise können die erste Schicht **S1** und die zweite Schicht **S2,** beziehungsweise die erste Schicht **S1** und die dritte Schicht **S3,** lose aufeinander gelegt sein oder miteinander kraftschlüssig verbunden sein, beispielsweise verklebt, laminiert, kaschiert oder verschraubt, vorzugsweise laminiert, sein. Werden diese zwei Schichten laminiert oder kaschiert, erfolgt die Laminierung oder Kaschierung vorzugsweise vollflächig. In einer anderen Ausführungsform können die zweite Schicht **S2** und die dritte Schicht **S3** lose aufeinander gelegt sein oder miteinander kraftschlüssig verbunden sein, beispielsweise verklebt, laminiert, kaschiert, verschweisst oder verschraubt, vorzugsweise verschweisst oder laminiert, sein.
In einer bevorzugten Ausführungsform wird die zweite Schicht **S2** lose auf die erste Schicht **S1** gelegt und die zweite Schicht **S2** anschliessend mit dem Boden, vorzugsweise über eine Abdichtungsschiene, verschraubt.
In einer besonders bevorzugten Ausführungsform wird die zweite Schicht **S2** mit der dritten Schicht **S3** am Rand verschweisst oder laminiert und die erste Schicht **S1** wird zwischen die zweite Schicht **S2** und die dritte Schicht **S3** gelegt.

Der geeignete mehrschichtige Bodenbelag soll bei Temperaturen unter 60°C, insbesondere unter 70°C bevorzugt unter 80°C nicht klebrig sein. Der thermoplastische Werkstoff ist vorzugsweise elastisch und weist insbesondere eine Bruchdehnung zwischen 100 und 800 % auf.

Die verschiedenen Schichten werden nach einem dem Fachmann bekannten Verfahren, typischerweise auf einem Walzwerk, insbesondere einem Kalander oder Extruder, hergestellt.
Typischerweise wird das thermoplastische Material der zweiten Schicht S2 und gegebenenfalls der dritten Schicht **S3** auf eine Applikationstemperatur im Bereich von 80° bis 250°C erhitzt und aufgeschmolzen, vorzugsweise mittels eines Extruders. Als besonders geeignet haben sich Temperaturen zwischen 130°C und 210°C, insbesondere zwischen 160°C und 190°C erwiesen. Anschliessend wird der geschmolzene Werkstoff ausgewalzt und typischerweise auf einem auf 100°C bis 250°C, vorzugsweise auf 140°C bis 200°C, noch mehr bevorzugt auf 160°C bis 185°C beheizten Walzwerk, vorzugsweise einem Kalander, zu einer Folie **S2** sowie zu einer Folie **S3** von einer Dicke im Bereich von 100 µm bis 5 mm, insbesondere von 500 µm bis 3 mm, besonders bevorzugt von 1.5 bis 3 mm, gepresst. Das Pressen kann auch mittels einer auf 100°C bis 250°C, vorzugsweise auf 140°C bis 200°C, noch mehr bevorzugt auf 150°C bis 185°C beheizten Plattenpresse mit einem Druck von 50 bis 200 kN, vorzugsweise von 60 bis 160 kN, bezogen auf eine Pressplattenfläche von typischerweise einer DIN A4-Grösse erfolgen. Anschliessend kann die Folie **S2** beziehungsweise die Folie **S3** vorzugsweise auf einem auf 140°C bis 200°C, noch mehr bevorzugt auf 160°C bis 185°C beheizten Walzwerk, vorzugsweise einem Kalander, oder auf einer auf 100°C bis 250°C, vorzugsweise auf 150°C bis 200°C, noch mehr bevorzugt auf 170°C bis 180°C, beheizten Plattenpresse mit einem Druck von 50 bis 150 kN, vorzugsweise von 80 bis 120 kN, bezogen auf die Pressplattenfläche, mit einer weiteren Folie, beispielsweise einer Schaumstoffolie oder einem Vlies der ersten Schicht **S1,** verbunden, vorzugsweise laminiert oder flammkaschiert, wodurch ein mehrschichtiger Werkstoff entstehen kann. Typische Herstellverfahren für mehrschichtige Werkstoffe aus Kunststoff mittels eines Kalanders sind in Schwarz, Ebeling und Furth, "Kunststoffverarbeitung", 9. Auflage, 2002, Vogel Verlag, S. 23-28, beschrieben.Typische Herstellverfahren für mehrschichtige Werkstoffe aus Kunststoff mittels eines Extruders sind in Schwarz, Ebeling und Furth, "Kunststoffverarbeitung", 9. Auflage, 2002, Vogel Verlag, S. 39-68, beschrieben.
Anschliessend wird der mehrschichtige Werkstoff typischerweise abgekühlt, typischerweise auf einem Walzwerk, zugeschnitten und auf Rollen aufgerollt.
Vorzugsweise wird der mehrschichtige Verbundwerkstoff auf einem Kalander oder einem Extruder hergestellt.

In einem weiteren Aspekt betrifft die vorliegende Erfindung ein Verfahren zum Beschichten eines Bodens für Tierställe mit einem mehrschichtigen Werkstoff, umfassend die Schritte
a) Bereitstellen einer ersten Schicht **S1,** einer zweiten Schicht **S2,** und gegebenenfalls einer dritten Schicht **S3,** wobei die erste Schicht S1 ein Schaumstoff oder Faserwerkstoff ist, wobei die zweite Schicht **S2** aus einem verschweissbaren thermoplastischen Material ist, welches mindestens ein thermoplastisches Polymer **P2** aufweist, wobei die dritte Schicht **S3** aus einem verschweissbaren thermoplastischen Material ist, welches mindestens ein thermoplastisches Polymers **P3** aufweist, wobei die Gewichtssumme aller thermoplastischen Polymere in der zweiten Schicht **S2** und der dritten Schicht **S3** jeweils mindestens 30 Gew.-%, bezogen auf das Gesamtgewicht der zweiten Schicht **S2** beziehungsweise der dritten Schicht **S3** beträgt;
b) Kontaktieren der ersten Schicht **S1** mit der zweiten Schicht **S2** und gegebenenfalls mit der dritten Schicht **S3,** wobei die zweite Schicht **S2** und die dritte Schicht **S3** auf der jeweils gegenüberliegenden Seite der ersten Schicht **S1** vorliegt;
   oder
b') Kontaktieren der zweiten Schicht **S2** mit der dritten Schicht **S3,** wobei die erste Schicht **S1** anschliessend zwischen die zweite Schicht **S2** und die dritte Schicht **S3** gebracht wird;
c) Auslegen der ersten Schicht **S1** oder gegebenenfalls der dritten Schicht **S3** auf den Boden eines Tierstalls;
d) Abdichten des Randes des mehrschichtigen Werkstoffs mit mindestens einem Mittel zur Abdichtung;
wobei Schritt c) vor oder nach Schritt b) oder b') erfolgt, und wobei Schritt d) vor oder nach Schritt c) erfolgt.

Als thermoplastische Polymere **P2** und **P3** sind dieselben Polymere geeignet, wie sie bereits oben für die zweite Schicht **S2** und die dritte Schicht **S3** beschrieben wurden. Als Schaumstoff oder Faserwerkstoff sind dieselben Schaumstoffe oder Faserwerkstoffe geeignet, wie sie bereits oben für die erste Schicht **S1** beschrieben wurden. Als Mittel zur Abdichtung sind dieselben geeignet, wie bereits oben beschrieben, vorzugsweise eine Schweissnaht oder eine Abdichtungsschiene.

In einer Ausführungsform wird die erste Schicht **S1** und die zweite Schicht **S2** als zweischichtiger Werkstoff beispielsweise auf einem Kalander hergestellt. Der fertige zweischichtige Bodenbelag wird auf die gewünschte Grösse zugeschnitten und auf den Stallboden gelegt. Vorzugsweise wird der Bodenbelag am Rand mit dem Stallboden oder der Stallwand verbunden. Vorzugsweise wird eine Abdichtungsschiene verwendet, welche am Rand des Bodenbelags angebracht wird, und welche so den Rand abdichtet. Vorzugsweise befindet sich am Rand des Stallbodens eine Holzleiste, auf die die Folie mit der Abdichtungsschiene aufgeschraubt werden kann.
Die erste Schicht **S1** und die zweite Schicht **S2** können auch separat hergestellt werden und die erste Schicht wird zuerst auf den Stallboden gelegt. Anschliessend wird die zweite Schicht **S2** auf die erste Schicht **S1** gelegt und die beiden Schichten werden vorzugsweise über eine Abdichtungsschiene oder über einen Klebstoff am Boden oder an der Wand befestigt. Unter die erste Schicht **S1** kann auch zuerst direkt auf den Boden die dritte Schicht **S3** gelegt werden und anschliessend darauf die erste Schicht **S1** und dann die zweite Schicht **S2.** Wichtig ist, dass der Rand des mehrschichtigen Bodenbelags anschliessend über eine Abdichtungsschiene oder einen Klebstoff abgedichtet wird.

In einer weiteren Ausführungsform werden die zweite Schicht **S2** und die dritte Schicht **S3** beispielsweise auf einem Kalander hergestellt. Anschliessend wird eine erste Schicht **S1** zwischen die zweite Schicht **S2** und die dritte Schicht **S3** gelegt, wobei die erste Schicht **S1** etwas kleiner als die zweite Schicht **S2** und die dritte Schicht **S3** ist, damit **S2** und **S3** am Rand direkt miteinander in Kontakt sind. Die zweite Schicht **S2** und die dritte Schicht **S3** werden am Rand miteinander verschweisst. Die erste Schicht **S1** kann auch erst zwischen die zweite Schicht **S2** und die dritte Schicht **S3** gelegt werden, nachdem drei Seitenränder von **S2** und **S3** verschweisst sind. Nach dem Einführen der ersten Schicht **S1** kann der vierte Seitenrand von **S2** und **S3** verschweisst werden. Auf diese Art entsteht eine Art Kissen, welches in der gewünschten Grösse auf Vorrat hergestellt werden kann und im Stall direkt auf den Boden gelegt werden kann.
Es ist auch möglich, dass die drei Schichten separat hergestellt und transportiert werden und dann vor Ort im Stall aufeinander gelegt und verschweisst bzw. am Boden oder an der Wand befestigt werden.

Das Verschweissen erfolgt vorzugsweise mit Heissluft bei einer Temperatur von vorzugsweise 300 bis 700°C, insbesondere von 400 bis 600°C, besonders bevorzugt von 450 bis 520°C. Das Verschweissen kann auch über Quellverschweissen erfolgen, beispielsweise mit einem Lösungsmittel, insbesondere Tetrahydrofuran.

Die verschiedenen Schichten können auch miteinander verklebt werden. Oder die untere Schicht kann mit dem Boden verklebt werden. Es hat sich gezeigt, dass sich Polyurethanklebstoffe, (Meth)acrylatklebstoffe, Epoxidharzklebstoffe oder Klebstoffe auf Basis von Alkoxysilan-funktionellen Prepolymeren bestens für eine Verklebung eignen. Besonders bevorzugt sind die Epoxidharzklebstoffe.

### Kurze Beschreibung der Zeichnung

Im folgenden werden anhand der Zeichnungen Ausführungsbeispiele der Erfindung näher erläutert. Gleiche Elemente sind in den verschiedenen Figuren mit den gleichen Bezugszeichen versehen.

Es zeigen:
- Fig. 1: Schematische Darstellung eines Querschnitts durch einen zweischichtigen Bodenbelag;
- Fig. 2: Schematische Darstellung eines Querschnitts durch einen dreischichtigen Bodenbelag.

Es sind nur die für das unmittelbare Verständnis der Erfindung wesentlichen Elemente gezeigt.

### Weg zur Ausführung der Erfindung

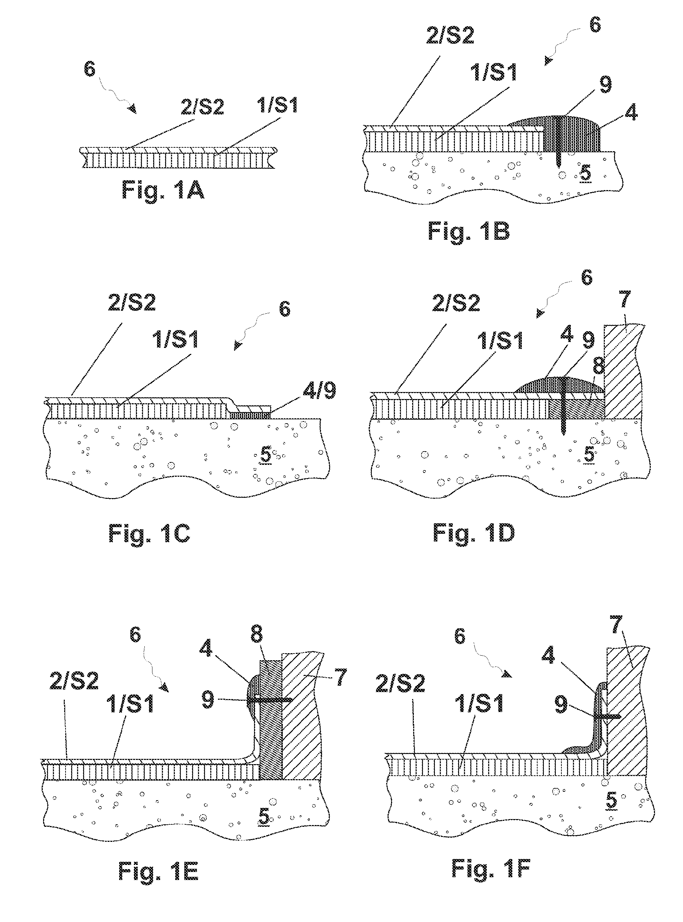

**Fig. 1A** zeigt eine schematische Darstellung eines Querschnitts durch einen zweischichtigen Werkstoff **6.** Der zweischichtige Bodenbelag besteht aus einer ersten Schicht **1/S1** und einer zweiten Schicht **2/S2.** Die zweite Schicht **2/S2** ist entweder lose auf die erste Schicht **1/S1** gelegt, oder über einen Klebstoff oder durch Laminieren oder Kaschieren miteinander verbunden. Nicht gezeigt ist hier das Mittel zur Abdichtung. Als erste Schicht **1/S1** kann beispielsweise der Polyethylen-Schaumstoff Trocellen®classic C-MN3 von Trocellen GmbH (Deutschland) verwendet werden in einer Schichtdicke von etwa 2cm. Als zweite Schicht **2/S2** kann beispielsweise die Folie Sikaplan®-20 PECO von Sika Schweiz AG verwendet werden mit einer Schichtdicke von etwa 2 mm.

**Fig. 1B, 1C, 1D, 1E** und **1 F** zeigen eine schematische Darstellung eines Querschnitts durch einen zweischichtigen Werkstoff **6** in verschiedenen Ausführungsformen.

**Fig. 1 B** zeigt einen zweischichtigen Bodenbelag **6** mit einer ersten Schicht **1/S1** und einer zweiten Schicht **2/S2.** Dazu wird ein zweischichtiger Bodenbelag verwendet, wie er in **Fig. 1A** beschrieben wurde. Der Rand des zweischichtigen Bodenbelags wird durch ein Mittel zur Abdichtung **4,** hier eine Abdichtungsschiene, vorzugsweise aus Hartkunststoff oder Metall, abgedichtet. Die Abdichtungsschiene **4** wird am Boden **5** befestigt mit einem Befestigungsmittel **9,** vorzugsweise angeschraubt. Anstelle der Schraube kann ein anderes Befestigungsmittel, beispielsweise ein Nagel oder ein Klebstoff verwendet werden. Die Abdichtungsschiene, und gegebenenfalls zusätzlich ein Teil oder der ganze Bodenbelag, kann beispielsweise unter Verwendung eines Klebstoffs mit dem Boden verklebt werden. Vorzugsweise führt die Abdichtungsschiene vollständig am Rand des Bodenbelags entlang, so dass der Bodenbelag vollständig abgedichtet ist.

**Fig. 1C** zeigt eine weitere Ausführungsform eines zweischichtigen Bodenbelags **6** mit einer ersten Schicht **1/S1** und einer zweiten Schicht **2/S2.** Der Rand des zweischichtigen Bodenbelags wird durch einen Klebstoff **4** abgedichtet. Zusätzlich dient der Klebstoff auch als Befestigungsmittel 9. Der Klebstoff kann auch teilweise unter der ersten Schicht **1/S1** vorliegen. Wichtig ist, dass die erste Schicht **1/S1** von der Umgebung abgedichtet ist, so dass keine Flüssigkeit in die erste Schicht **1/S1** eindringen kann.

**Fig. 1D** zeigt eine weitere Ausführungsform eines zweischichtigen Bodenbelags **6** mit einer ersten Schicht **1/S1** und einer zweiten Schicht **2/S2.** Der Rand des zweischichtigen Bodenbelags, insbesondere die erste Schicht **1/S1,** wird durch ein Mittel zur Abdichtung **4,** hier eine Abdichtungsschiene, vorzugsweise aus Hartkunststoff oder Metall, abgedichtet. Zusätzlich wird zur verbesserten Abdichtung eine Bodenleiste **8,** vorzugsweise eine Holzleiste verwendet. Die Bodenleiste **8** kann direkt mit dem Mittel zur Abdichtung **4** in Kontakt sein, oder wie hier dargestellt, über den Rand der zweiten Schicht mit dem Mittel zur Abdichtung **4** in Kontakt sein. Die Abdichtungsschiene **4** und die Bodenleiste **8** werden am Boden **5** befestigt mit einem Befestigungsmittel **9,** vorzugsweise mit einer Schraube angeschraubt. Diese Ausführungsform ist besonders vorteilhaft, da das Befestigungsmittel **9** den zweischichtigen Bodenbelag oder ein Teil davon, hier die zweite Schicht **2/S2,** mitbefestigt, und nicht nur das Mittel zur Abdichtung **7** am Boden befestigt ist. So kann die Gefahr verringert werden, dass der Bodenbelag beim Betreten der Tiere aus der Abdichtungsschiene entweicht. Die Abdichtungsschiene **4** und die Bodenleiste **8** sind vorzugsweise in Kontakt mit der Wand **7,** so dass zwischen Wand und dem Bodenbelag bzw. dem Mittel zur Abdichtung keine Flüssigkeit eindringen kann.

**Fig. 1E** zeigt eine weitere Ausführungsform eines zweischichtigen Bodenbelags **6** mit einer ersten Schicht **1/S1** und einer zweiten Schicht **2/S2.** Die zweite Schicht **2/S2** ist an mindestens einer Wand 7 hochgezogen, so dass sie eine Art Wanne bildet. Der Rand der zweiten Schicht **2/S2** wird durch ein Mittel zur Abdichtung **4,** hier eine Abdichtungsschiene, vorzugsweise aus Hartkunststoff oder Metall, abgedichtet. Zusätzlich wird zur verbesserten Abdichtung eine Wandleiste **8,** vorzugsweise eine Holzleiste verwendet. Die Wandleiste **8** kann direkt mit dem Mittel zur Abdichtung **4** in Kontakt sein, oder sie kann über die zweite Schicht **2/S2** mit dem Mittel zur Abdichtung **4** in Kontakt sein, wie beispielsweise in **Fig. 1 D** gezeigt. Die Abdichtungsschiene **4** und die Wandleiste **8** werden an der Wand **7** befestigt mit einem Befestigungsmittel **9,** vorzugsweise mit einer Schraube angeschraubt. Vorzugsweise wird auch die zweite Schicht **2/S2** mit dem Befestigungsmittel **9** befestigt. So kann die Gefahr verringert werden, dass der Bodenbelag beim Betreten der Tiere aus der Abdichtungsschiene entweicht. Es ist auch möglich, dass die erste Schicht **1/S1,** und somit der ganze zweischichtige Bodenbelag **6,** an der Wand **7** mithochgezogen und befestigt wird.

**Fig. 1F** zeigt eine weitere Ausführungsform eines zweischichtigen Bodenbelags **6** mit einer ersten Schicht **1/S1** und einer zweiten Schicht **2/S2.** Die zweite Schicht **2/S2** ist an mindestens einer Wand 7 hochgezogen, so dass sie eine Art Wanne bildet. Der Rand des zweischichtigen Bodenbelags wird durch ein Mittel zur Abdichtung **4,** hier eine Abdichtungsschiene, vorzugsweise aus Hartkunststoff oder Metall, abgedichtet. Die Abdichtungsschiene **4** weist im Querschnitt eine L-Form auf und führt teilweise entlang des Bodens **5** und teilweise entlang der Wand **7.** Die Abdichtungsschiene **4** wird an der Wand **7** befestigt mit einem Befestigungsmittel **9,** vorzugsweise mit einer Schraube. Vorzugsweise wird auch die zweite Schicht **2/S2** mit dem Befestigungsmittel **9** befestigt. So kann die Gefahr verringert werden, dass der Bodenbelag beim Betreten der Tiere aus der Abdichtungsschiene entweicht. Es ist auch möglich, dass die erste Schicht **1/S1,** und somit der ganze zweischichtige Bodenbelag **6,** an der Wand **7** mithochgezogen und befestigt wird.

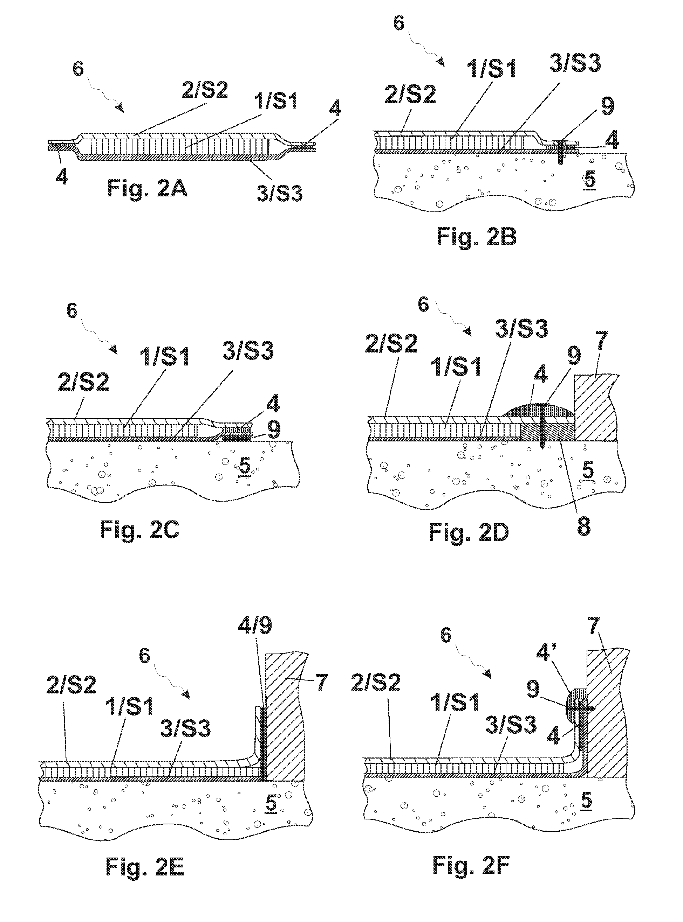

**Fig. 2A** zeigt eine schematische Darstellung eines Querschnitts durch einen dreischichtigen Werkstoff **6.** Der dreischichtige Bodenbelag besteht aus einer ersten Schicht **1/S1,** einer zweiten Schicht **2/S2** und einer dritten Schicht **3/S3.** Die drei Schichten sind in direktem Kontakt verbunden, beispielsweise aufeinander gelegt oder verschweisst. Die zweite Schicht **2/S2** und die dritte Schicht **3/S3** sind etwas grösser als die erste Schicht **1/S1** und sind am Rand über eine Schweissnaht **4** miteinander verbunden, welche die erste Schicht **1/S1** vor der Umgebung, insbesondere vor Flüssigkeitseintritt abdichtet. Der dreischichtige Bodenbelag weist hier eine Art Kissenform auf, wobei die zweite Schicht **2/S2** und die dritte Schicht **3/S3** die Kissenhülle darstellen und die erste Schicht **1/S1** den Kisseninhalt darstellt. Als erste Schicht **1/S1** kann beispielsweise der Polyethylen-Schaumstoff Trocellen®classic C-MN3 von Trocellen GmbH (Deutschland) verwendet werden mit einer Schichtdicke von etwa 2cm. Als zweite Schicht **2/S2** und als dritte Schicht **3/S3** können beispielsweise die Folie Sikaplan®-20 PECO von Sika Schweiz AG verwendet werden mit einer Schichtdicke von etwa 2 mm.

**Fig. 2B, 2C, 2D, 2E** und **2F** zeigen eine schematische Darstellung eines Querschnitts durch einen dreischichtigen Werkstoff 6 in verschiedenen Ausführungsformen.

**Fig. 2B** zeigt einen dreischichtigen Bodenbelag **6** mit einer ersten Schicht **1/S1,** einer zweiten Schicht **2/S2** und einer dritten Schicht **3/S3.** Dazu wird ein dreischichtiger Bodenbelag verwendet, wie er in **Fig. 2A** beschrieben wurde. Der Rand des dreischichtigen Bodenbelags wird am Boden **5** befestigt mit einem Befestigungsmittel **9,** vorzugsweise mit einer Schraube. Der dreischichtige Bodenbelag **6** kann auch lose auf den Boden gelegt werden.

**Fig. 2C** zeigt einen dreischichtigen Bodenbelag **6** wie er in **Fig. 2B** beschrieben wurde mit dem Unterschied, dass anstelle der Schraube ein Klebstoff als Befestigungsmittel **9** verwendet wird. Der Rand des Bodenbelags oder der ganze Bodenbelag, kann beispielsweise unter Verwendung eines Klebstoffs mit dem Boden verklebt werden. Vorzugsweise führt der Klebstoff vollständig am Rand des Bodenbelags entlang, so dass der Bodenbelag vollständig abgedichtet ist.

**Fig. 2D** zeigt eine weitere Ausführungsform eines dreischichtigen Bodenbelags **6** mit einer ersten Schicht **1/S1,** einer zweiten Schicht **2/S2** und einer dritten Schicht 3/S3. Der Rand des dreischichtigen Bodenbelags, insbesondere die erste Schicht **1/S1,** wird durch ein Mittel zur Abdichtung **4,** hier eine Abdichtungsschiene, vorzugsweise aus Hartkunststoff oder Metall, abgedichtet. Zusätzlich wird zur verbesserten Abdichtung eine Bodenleiste **8,** vorzugsweise eine Holzleiste verwendet. Die Bodenleiste **8** kann direkt mit dem Mittel zur Abdichtung **4** in Kontakt sein, oder wie hier dargestellt, über den Rand der zweiten Schicht mit dem Mittel zur Abdichtung **4** in Kontakt sein. Die Abdichtungsschiene **4** und die Bodenleiste **8** werden am Boden **5** befestigt mit einem Befestigungsmittel **9,** vorzugsweise mit einer Schraube. Diese Ausführungsform ist vorteilhaft, da das Befestigungsmittel **9** den zweischichtigen Bodenbelag oder ein Teil davon, hier die zweite Schicht **2/S2,** mitbefestigt, und nicht nur das Mittel zur Abdichtung **7** am Boden befestigt ist. So kann die Gefahr verringert werden, dass der Bodenbelag beim Betreten der Tiere aus der Abdichtungsschiene entweicht. Die Abdichtungsschiene **4** und die Bodenleiste **8** sind vorzugsweise in Kontakt mit der Wand **7,** so dass zwischen Wand und dem Bodenbelag bzw. dem Mittel zur Abdichtung keine Flüssigkeit eindringen kann.

**Fig. 2E** zeigt eine weitere Ausführungsform eines dreischichtigen Bodenbelags **6** mit einer ersten Schicht **1/S1,** einer zweiten Schicht **2/S2** und einer dritten Schicht **3/S3.** Die zweite Schicht **2/S2** ist entweder lose auf die erste Schicht **1/S1** gelegt, oder über einen Klebstoff oder durch Laminieren oder Kaschieren miteinander verbunden. Die die erste Schicht **1/S1** ist entweder lose auf die dritte Schicht **3/S3** gelegt, oder über einen Klebstoff oder durch Laminieren oder Kaschieren miteinander verbunden. Die zweite Schicht **2/S2** ist an mindestens einer Wand **7** hochgezogen, so dass sie eine Art Wanne bildet. Der Rand der zweiten Schicht **2/S2** wird an der Wand **7** befestigt unter Verwendung eines Klebstoffs **4/9.** Der Klebstoff dient hier zusätzlich als Mittel zur Abdichtung **4.** Zusätzlich kann auch ein Teil der ersten Schicht **1/S1** und der dritten Schicht **3/S3** mit der Wand oder mit dem Boden **5** verklebt werden. Es ist auch möglich, dass die erste Schicht **1/S1** und die dritte Schicht **3/S3** zu einem Teil an der Wand **7** hochgezogen und befestigt werden.

**Fig. 2F** zeigt eine weitere Ausführungsform eines dreischichtigen Bodenbelags **6** mit einer ersten Schicht **1/S1,** einer zweiten Schicht **2/S2** und einer dritten Schicht **3/S3.** Dazu wird ein dreischichtiger Bodenbelag verwendet, wie er in **Fig. 2A** beschrieben wurde. Der Bodenbelag **6** im Bereich der Schweissnaht **4** am Rand der zweiten Schicht **2/S2** und der dritten Schicht **3/S3** an mindestens einer Wand **7** hochgezogen, so dass er eine Art Wanne bildet. Es ist auch möglich, dass die erste Schicht **1/S1** zu einem Teil an der Wand **7** hochgezogen wird. Der Rand des dreischichtigen Bodenbelags **6** wird zusätzlich zur Schweissnaht **4** durch ein weiteres Mittel zur Abdichtung **4',** hier eine Abdichtungsschiene, vorzugsweise aus Hartkunststoff oder Metall, abgedichtet. Die Abdichtungsschiene **4'** wird an der Wand **7** befestigt mit einem Befestigungsmittel **9,** vorzugsweise mit einer Schraube. Vorzugsweise wird auch die zweite Schicht **2/S2** und die dritte Schicht **3/S3,** und gegebenenfalls die erste Schicht **1/S1,** mit dem Befestigungsmittel **9** befestigt. So kann die Gefahr verringert werden, dass der Bodenbelag beim Betreten der Tiere aus der Abdichtungsschiene entweicht.

### Bezugszeichen

- 1: erste Schicht S1
- 2: zweite Schicht S2
- 3: dritte Schicht S3
- 4: Mittel zur Abdichtung
- 4': weiteres Mittel zur Abdichtung
- 5: Boden
- 6: mehrschichtiger Werkstoff
- 7: Wand
- 8: Boden- oder Wandleiste
- 9: Befestigungsmittel

## Patentansprüche

1. Verwendung eines mehrschichtigen Werkstoffs (6) als Bodenbelag für Tierställe, insbesondere für Stallböden für Massentierhaltung, wobei der Bodenbelag mindestens eine erste Schicht S1 (1) und mindestens eine zweite Schicht S2 (2) umfasst, wobei die erste Schicht S1 (1) auf der dem Boden zugewandten Seite und die zweite Schicht S2 (2) auf der dem Boden abgewandten Seite des Bodenbelags vorliegt, **dadurch gekennzeichnet, dass** die erste Schicht S1 (1) ein Schaumstoff oder Faserwerkstoff ist und die zweite Schicht S2 (2) aus einem verschweissbaren thermoplastischen Material ist, welches mindestens ein thermoplastisches Polymer **P2** aufweist, wobei die Gewichtssumme aller thermoplastischen Polymere in der zweiten Schicht **S2** (2) mindestens 30 Gew.-%, bezogen auf das Gesamtgewicht der zweiten Schicht S2 (2), beträgt, und wobei der mehrschichtige Werkstoff (6) am Rand mindestens ein Mittel zur Abdichtung (4) aufweist.

2. Verwendung nach Anspruch 1, **dadurch gekennzeichnet, dass** der Bodenbelag zwischen dem Boden (5) und der ersten Schicht S1 (1) mindestens eine weitere Schicht S3 (3) aufweist, wobei die dritte Schicht S3 (3) aus einem verschweissbaren thermoplastischen Material ist, welches mindestens ein thermoplastisches Polymers **P3** aufweist,
wobei die Gewichtssumme aller thermoplastischen Polymere der dritten Schicht **S3** (3) mindestens 30 Gew.-%, bezogen auf das Gesamtgewicht der dritten Schicht S3 (3), beträgt.

3. Verwendung nach einem der Ansprüche 1 oder 2, **dadurch gekennzeichnet, dass** der Bodenbelag zum Beschichten von Böden für Schweine- oder Ziegenställe verwendet wird.

4. Verwendung nach einem der vorhergehenden Ansprüche zur Steigerung des Wohlbefindens, insbesondere zur Verminderung von Verletzungen, von Tieren in Tierhaltungen.

5. Verwendung nach einem der vorhergehenden Ansprüche, **dadurch gekennzeichnet, dass** die zweite Schicht S2 (2) flüssigkeitsundurchlässig ist.

6. Verwendung nach einem der vorhergehenden Ansprüche, **dadurch gekennzeichnet, dass** das Mittel zur Abdichtung (4) eine Schweissnaht ist.

7. Verwendung nach einem der vorhergehenden Ansprüche, **dadurch gekennzeichnet, dass** der Rand des mehrschichtigen Werkstoffs (6) vollständig durch das Mittel zur Abdichtung (4) abgedichtet ist.

8. Verwendung nach einem der vorhergehenden Ansprüche, **dadurch gekennzeichnet, dass** die zweite Schicht S2 (2) auf der der ersten Schicht S1 (1) abgewandten Oberfläche eine rutschfeste Oberfläche aufweist.

9. Verwendung nach Anspruch 8, **dadurch gekennzeichnet, dass** die rutschfeste Oberfläche durch Prägung, insbesondere Diamantprägung, Einsandung oder durch Beschichtung entsteht.

10. Verwendung nach einem der vorhergehenden Ansprüche, **dadurch gekennzeichnet, dass** die erste Schicht S1 (1) eine Schichtdicke von mindestens 0.1 cm, vorzugsweise 1 bis 6 cm, aufweist.

11. Verwendung nach einem der vorhergehenden Ansprüche, **dadurch gekennzeichnet, dass** die Schicht S2 (2) eine Schichtdicke von mindestens 0.1 mm, vorzugsweise 0.5 bis 5 mm, aufweist.

12. Verwendung nach einem der Ansprüche 2 bis 11, **dadurch gekennzeichnet, dass** die Schicht S3 (3) eine Schichtdicke von mindestens 0.1 mm, vorzugsweise 0.5 bis 5 mm, aufweist.

13. Verwendung nach einem der vorhergehenden Ansprüche, **dadurch gekennzeichnet, dass** das thermoplastische Polymer **P2** ausgewählt ist aus der Gruppe bestehend aus Polyamid, Polyester, Polycarbonat, Polyacetat, Polyurethan, und einem Homo- oder Copolymer, welches mindestens eine Monomereinheit **M1** enthält, welche ausgewählt ist aus der Gruppe bestehend aus Olefin, insbesondere Ethylen, Propylen, Butylen, Isobutylen, chloriertem Ethylen, chlorsulfoniertem Ethylen, Vinylacetat, Vinylalkohol, Vinylchlorid (Meth)acrylat, (Meth)acrylsäure, Fumarsäure, Fumarsäureester, Maleinsäure, Maleinsäureester, Maleinsäureanhydrid, Styrol, Acrylonitril, Butadien, und Isobutadien.

14. Verwendung nach Anspruch 13, **dadurch gekennzeichnet, dass** das thermoplastische Polymer **P2** Polyvinylchlorid, Polyethylen, Polypropylen, Copolymer aus Ethylen und Propylen, chloriertem Polyethylen, chlorsulfoniertem Polyethylen, Copolymer aus Ethylen und Vinylacetat, oder eine Mischung davon, ist.

15. Verwendung nach Anspruch 13, **dadurch gekennzeichnet, dass** das thermoplastische Polymer **P2** aus Polyurethan ist, welches hergestellt ist aus Polyisocyanat und Polyesterpolyol und/oder Polyetherpolyol und/oder Polyamin.

16. Verwendung nach einem der Ansprüche 2 bis 15, **dadurch gekennzeichnet, dass** das thermoplastische Polymer **P3** ausgewählt ist aus der Gruppe bestehend aus Polyamid, Polyester, Polycarbonat, Polyacetat, Polyurethan, und einem Homo- oder Copolymer, welches mindestens eine Monomereinheit **M2** enthält, welche ausgewählt ist aus der Gruppe bestehend aus Olefin, insbesondere Ethylen, Propylen, Butylen, Isobutylen, chloriertem Ethylen, chlorsulfoniertem Ethylen, Vinylacetat, Vinylalkohol, Vinylchlorid (Meth)acrylat, (Meth)acrylsäure, Fumarsäure, Fumarsäureester, Maleinsäure, Maleinsäureester, Maleinsäureanhydrid, Styrol, Acrylonitril, Butadien, und Isobutadien.

17. Verwendung nach einem der vorhergehenden Ansprüche, **dadurch gekennzeichnet, dass** der Schaumstoff mindestens ein Polymer **P1** umfasst, welches ausgewählt ist aus der Gruppe bestehend aus Polyvinylchlorid, Polyolefin, Polystyrol, Polyurethan, Polyacetat, Polyacrylat, Polyamid und Polycarbonat.

18. Verwendung nach einem der vorhergehenden Ansprüche, **dadurch gekennzeichnet, dass** der Faserwerkstoff ein Vlies ist.

19. Verwendung nach einem der vorhergehenden Ansprüche, **dadurch gekennzeichnet, dass** die erste Schicht S1 (1), die zweite Schicht S2 (2) oder die dritte Schicht S3 (3) mindestens einen weiteren Zusatzstoff umfasst, wobei der Zusatzstoff vorzugsweise ausgewählt ist aus der Gruppe bestehend aus Stabilisatoren, Weichmacher, Antioxidantien, Füllstoffe, Verarbeitungshilfsmittel und Pigmente.

20. Verwendung nach einem der vorhergehenden Ansprüche, **dadurch gekennzeichnet, dass** die erste Schicht S1 (1) und die zweite Schicht S2 (2) und gegebenenfalls die dritte Schicht S3 (3) miteinander kraftschlüssig verbunden, vorzugsweise verklebt, verschweisst, laminiert oder verschraubt, sind.

21. Verwendung nach einem der Ansprüche 2 bis 19, **dadurch gekennzeichnet, dass** die erste Schicht S1 (1) und die dritte Schicht S3 (3) miteinander kraftschlüssig verbunden, vorzugsweise verklebt, verschweisst, laminiert oder verschraubt, sind.

22. Verfahren zum Beschichten eines Bodens für Tierställe mit einem mehrschichtigen Werkstoff (6), umfassend die Schritte
a) Bereitstellen einer ersten Schicht S1 (1), einer zweiten Schicht S2 (2), und gegebenenfalls einer dritten Schicht **S3** (3), wobei die erste Schicht S1 (1) ein Schaumstoff oder Faserwerkstoff ist, wobei die zweite Schicht S2 (2) aus einem verschweissbaren thermoplastischen Material ist, welches mindestens ein thermoplastisches Polymer **P2** aufweist, wobei die dritte Schicht S3 (3) aus einem verschweissbaren thermoplastischen Material ist, welches mindestens ein thermoplastisches Polymers **P3** aufweist, wobei die Gewichtssumme aller thermoplastischen Polymere in der zweiten Schicht **S2** (2) und der dritten Schicht **S3** (3) jeweils mindestens 30 Gew.-%, bezogen auf das Gesamtgewicht der zweiten Schicht S2 (2) beziehungsweise der dritten Schicht S3 (3) beträgt;
b) Kontaktieren der ersten Schicht S1 (1) mit der zweiten Schicht S2 (2) und gegebenenfalls mit der dritten Schicht S3 (3), wobei die zweite Schicht S2 (2) und die dritte Schicht S3 (3) auf der jeweils gegenüberliegenden Seite der ersten Schicht S1 (1) vorliegt; oder
b') Kontaktieren der zweiten Schicht S2 (2) mit der dritten Schicht S3 (3), wobei die erste Schicht **S1** (1) anschliessend zwischen die zweite Schicht S2 (2) und die dritte Schicht S3 (3) gebracht wird;
c) Auslegen der ersten Schicht S1 (1) oder gegebenenfalls der dritten Schicht **S3** (3) auf den Boden eines Tierstalls;
d) Abdichten des Randes des mehrschichtigen Werkstoffs (6) mit mindestens einem Mittel zur Abdichtung (4);
wobei Schritt c) vor oder nach Schritt b) oder b') erfolgt, und
wobei Schritt d) vor oder nach Schritt c) erfolgt.

23. Verfahren nach Anspruch 22, **dadurch gekennzeichnet, dass** das Mittel zur Abdichtung (4) eine Schweissnaht ist.

24. Verfahren nach Anspruch 23, **dadurch gekennzeichnet, dass** das Mittel zur Abdichtung (4) eine Schweissnaht ist und die zweite Schicht S2 (2) mit der dritten Schicht S3 (3) in Schritt b') verschweisst wird.

25. Verfahren nach einem der Ansprüche 22 bis 24, **dadurch gekennzeichnet, dass** die erste Schicht S1 (1) vor oder nach Schritt c) mit der zweiten Schicht S2 (21) und gegebenenfalls mit dem Boden kraftschlüssig verbunden, vorzugsweise verklebt, verschweisst, laminiert oder verschraubt, wird.

26. Verfahren nach einem der Ansprüche 22 bis 25, **dadurch gekennzeichnet, dass** die dritte Schicht S3 (3) vor oder nach Schritt c) mit der ersten Schicht S1 (1) und/oder mit der zweiten Schicht S2 (2) und gegebenenfalls mit dem Boden kraftschlüssig verbunden, vorzugsweise verklebt, verschweisst, laminiert oder verschraubt, wird.

27. Verfahren nach einem der Ansprüche 22 bis 26, **dadurch gekennzeichnet, dass** die erste Schicht S1 (1) eine Schichtdicke von mindestens 0.1 cm, vorzugsweise 1 bis 6 cm, aufweist.

28. Verfahren nach einem der Ansprüche 22 bis 27, **dadurch gekennzeichnet, dass** die Schicht S2 (2) eine Schichtdicke von mindestens 0.1 mm, vorzugsweise 0.5 bis 5 mm, aufweist.

29. Verfahren nach einem der Ansprüche 22 bis 28, **dadurch gekennzeichnet, dass** die Schicht S3 (3) eine Schichtdicke von mindestens 0.1 mm, vorzugsweise 0.5 bis 5 mm, aufweist.

30. Verfahren nach einem der Ansprüche 22 bis 29, **dadurch gekennzeichnet, dass** das thermoplastische Polymer **P1** und das thermoplastische Polymer **P3** ausgewählt ist aus der Gruppe bestehend aus Polyamid, Polyester, Polycarbonat, Polyacetat, Polyurethan, und einem Homo- oder Copolymer, welches mindestens ein Monomer enthält, welches ausgewählt ist aus der Gruppe bestehend aus Olefin, insbesondere Ethylen, Propylen, Butylen, Isobutylen, chloriertem Ethylen, chlorsulfoniertem Ethylen, Vinylacetat, Vinylalkohol, (Meth)acrylat, (Meth)acrylsäure, Fumarsäure, Maleinsäure, Anhydrid oder Ester der Fumar- oder Maleinsäure, Styrol, Acrylonitril, Butadien, und Isobutadien.

31. Verfahren nach einem der Ansprüche 22 bis 30, **dadurch gekennzeichnet, dass** das poröse Material ein Schaumstoff ist, welcher mindestens ein Polymer **P2** umfasst, welches ausgewählt ist aus der Gruppe bestehend aus Polyvinylchlorid, Polyolefin, Polystyrol, Polyurethan, Polyacetat, Polyacrylat, Polyamid und Polycarbonat.
